# EUROPÄISCHE PATENTSCHRIFT

(11) **EP 2 469 239 B1**
(45) Veröffentlichungstag und Bekanntmachung des Hinweises auf die Patenterteilung: **21.05.2014**
(21) Anmeldenummer: 10196250.4
(22) Anmeldetag: 21.12.2010
(51) Int. Cl.: G01D 5/04, G01D 5/245

(54) **Multiturn-Winkelmessvorrichtung**
Multi-turn angle measuring device
Dispositif de mesure d'angle multi-tours

(43) Veröffentlichungstag der Anmeldung: 27.06.2012
(73) Patentinhaber: SICK STEGMANN GmbH, 78166 Donaueschingen (DE)
(72) Erfinder: Siraky, Josef, 78166, Donaueschingen (DE)
(74) Vertreter: Hehl, Ulrich

(56) Entgegenhaltungen:
- EP-A2- 1 279 932
- DE-A1- 2 817 172

## Beschreibung

Die Erfindung betrifft eine Multiturn-Winkelmessvorrichtung und ein Verfahren zur Messung von Winkelstellung und Umdrehungsanzahl einer Eingangswelle nach dem Oberbegriff von Anspruch 1 beziehungsweise 10.

Winkelmessvorrichtungen oder Drehgeber dienen dazu, Winkelstellungen zu messen, beispielsweise an der Welle eines Motors. Dazu wird eine Codescheibe drehfest mit der Welle verbunden und deren Stellung anhand der Codierung mit einem Sensor bestimmt. Dabei werden die verschiedensten aufeinander abgestimmten Codierungen und Sensorprinzipien verwendet, wie optische, magnetische, induktive oder kapazitive Abtastung.

Man unterscheidet inkrementelle und absolute Systeme. Eine absolute Codierung liefert direkt aus einer Messung die vollständige Winkelinformation, also auch unmittelbar nach dem Einschalten. Dazu sind mehrere Codespuren vorgesehen, welche gemeinsam in jeder Position die Winkelinformation enthalten. Dementsprechend muss auch die Abtastung aufwändiger sein, um die mehreren Codespuren zu erfassen.

Eine inkrementelle Messung dagegen erkennt lediglich die relative Bewegung. Dazu genügt eine sehr einfache Codierung und Abtastung, etwa äquidistante, untereinander gleichartige Markierungen. Sofern die Ausgangsstellung bekannt ist, kann natürlich auch ein inkrementelles System anhand der relativen Bewegung absolute Winkelstellungen ausgeben.

Für den allgemeinen Maschinenbau werden Drehwinkelmesssysteme eingesetzt, die nicht nur die absolute Position innerhalb einer Umdrehung als Messwert ausgeben, sondern auch die absolute Anzahl der Umdrehungen. Eine solche absolute Messung ist hauptsächlich deshalb notwendig, weil die Achse, an der das Drehwinkelmesssystem befestigt ist, unter Umständen auch ohne verfügbare Versorgungsspannung bewegt werden kann und es für den Betrieb dieser Achse auf der anderen Seite unbedingt notwendig ist, beim Einschalten deren absolute Position zu kennen, um definiert kommutieren und anfahren zu können. Manche Systeme erlauben alternativ eine blinde Referenzfahrt, aber wo dies nicht möglich ist, werden absolute Messwerte im Moment des Einschaltens verlangt.

Zur Messung der Umdrehungsanzahl werden im Stand der Technik Multiturncodedrehgeber eingesetzt, wie sie beispielsweise aus der DE 28 17 172 C2 oder der DE 198 20 014 A1 bekannt sind. Dabei sind an einen primären Encoder für die Winkelauflösung innerhalb einer Umdrehung untersetzt über ein Getriebe weitere absolute Winkelcodierer angekoppelt. Je nach Untersetzung zählt beispielsweise der erste dieser Winkelcodierer ganze Umdrehungen des primären Encoders, und die Winkelcodierer auf nachgeordneten Stufen zählen entsprechende Vielfache. Wegen der absoluten Codierung des primären Encoders und der weiteren Winkelcodierer wird dann unabhängig von der Bestromung praktisch jederzeit eine eindeutige Codierung sowohl der Winkelposition als auch der Umdrehungsanzahl mitgeführt. Damit liegt ohne Abhängigkeit von einer Hilfsenergie die gesamte Strecke codiert vor.

Nachteilig hieran ist aber, dass die weiteren Winkelcodierer über das Getriebe ständig im Eingriff sind und daher ein hoher Verschleiß der Getriebekette unvermeidlich ist. Dies gilt vor allem dann, wenn die Ankopplung der ersten Getriebestufe an ein großes Eingangsrad erfolgen muss, wo der Verschleiß den Einsatz dieses Verfahrens bisher verhindert hat. Denn wegen des begrenzten Bauraums kann dabei eine erste Stufe des Getriebes nur stark übersetzt angekoppelt werden. Dabei bewegt sich das Ritzel der ersten Stufe mit einer Drehzahl, die noch durch die Übersetzung nach oben skaliert ist. Bei einer Drehzahl der Eingangswelle von 6.000 beispielsweise würde eine Übersetzung mit einem Faktor 10 zu einer Drehzahl von 60.000 des ersten Ritzels führen, was nicht nur entsprechenden Verschleiß, sondern auch eine hohe Geräuschentwicklung mit sich bringt.

Die EP 1 391 696 A2 schlägt den Ausweg vor, die Drehachse des Zahnrads zur Ankopplung der ersten Multiturnstufe senkrecht zur Drehachse der Eingangswelle anzuordnen. Damit wird in dieser Stufe von dem üblichen Stirngetriebe abgewichen, um in dem vorhandenen Bauraum eine Untersetzung zu erzielen. Das ändert aber nichts an dem prinzipiellen Verschleiß, da auch das hier modifizierte Getriebe ständig beansprucht wird.

Aus der EP 1 279 932 A2 ist eine Rotationserfassungsvorrichtung für ein Lenkrad bekannt. Mit Hilfe einer Codescheibe wird die Winkelstellung innerhalb einer Umdrehung optisch erfasst. Weiterhin ist am Außenumfang des Rotors der Vorrichtung eine Zwischengetriebestufe in Form eines Zahnrads vorgesehen, welches einmal pro Umdrehung mit einem doppelten Vorsprung an dem Rotor in Eingriff kommt und dadurch um zwei Zähne verdreht wird. Nach außen steht das Zahnrad mit einem einen Viertelkreis umfassenden Zahnkranz in Eingriff, der folglich ebenfalls einmal pro Umdrehung um zwei Zähne verschoben wird. Dem Zahnkranz gegenüberliegend sind fünf Lichtschranken und eine optische Abschirmung angeordnet. Die durch je eine vollständige Umdre-hung verursachte Verschiebung des Zahnkranzes um zwei Zähne bewirkt, dass die optische Abschirmung ihre Position von einer Lichtschranke zu einer benachbarten Lichtschranke verändert. Durch Auswertung der Lichtschranken können somit insgesamt fünf vollständige Umdrehungen unterschieden werden. Bei entsprechend zentriert gewählter Nullstellung des Lenkrades werden somit insgesamt Drehbewegungen von -900° bis +900° erfasst.

Als Alternative zu mechanisch angekoppelten Multiturnstufen sind Systeme bekannt, welche die Umdrehungen elektronisch zählen. Offensichtlich muss dazu die Stromversorgung gewährleistet sein. Dabei muss die Zählung vollkommen zuverlässig bleiben. Bei Multiturnstufen wird eine Fehllesung wegen der Inkonsistenz mit der Folgelesung erkannt. Bei einem rein zählenden Verfahren dagegen bleibt ein Verzählen völlig unbemerkt.

Ein Weg im Stand der Technik besteht darin, Hilfsenergie in Form eine Batterie oder eines Superkondensators bereitzustellen, um auch bei ausgeschalteter Versorgungsenergie eine Umdrehungszählerfunktion aufrecht zu erhalten. Diese Hilfsenergie hat aber eine begrenzte Lebensdauer und erfordert dementsprechend eine regelmäßige Wartung.

Es ist ferner bekannt, die Energie im nicht bestromten Zustand mit Hilfe von Wieganddrähten aus der Drehbewegung zu erzeugen. Deren Energieimpulse reichen aus, die notwendige Elektronik zu versorgen, um den Zählvorgang vorzunehmen und das Ergebnis in einen nichtflüchtigen Speicher zu retten. Die Schaltung und die Versorgung durch Wieganddrähte ist aber verhältnismäßig aufwändig. Die DE 10 2008 051 479 A1 stellt eine Art Hybridlösung dar, bei welcher ein Zähler für die Umdrehungsanzahl mit einem Getriebe angekoppelt ist, wobei dieser Zähler über einen Wiegand-Draht versorgt werden kann. Das löst natürlich nicht das Problem mit dem Verschleiß des Getriebes.

Daher ist Aufgabe der Erfindung, eine zuverlässige und einfache Messung von Winkelstellung und Umdrehungsanzahl anzugeben.

Diese Aufgabe wird durch eine Multiturn-Winkelmessvorrichtung nach Anspruch 1 und durch ein Verfahren zur Messung von Winkelstellung und Umdrehungsanzahl nach Anspruch 10 gelöst. Dabei geht die Erfindung von dem Grundgedanken aus, die sichere absolute Erfassung einer Umdrehung bei einem codierten System im Gegensatz zu einem rein zählenden System auszunutzen. Andererseits wird aber auch die Verschleißfreiheit des zählenden Systems genutzt. Das Getriebe mit den angekoppelten Drehgebern der weiteren Multiturnstufen ist erforderlich, damit im unbestromten Zu-stand die Drehung der Eingangswelle erfasst wird. Der Grundgedanke der Erfindung liegt deshalb darin, dann auch nur im unbestromten Zustand einen Getriebeeingriff herzustellen. Dazu ist ein Kopplungselement vorgesehen, um die erste Multiturnstufe in Getriebeeingriff oder außer Getriebeeingriff mit der Eingangswelle zu bringen.

Die Erfindung hat den Vorteil, dass eine zumindest weitgehend wartungs- und verschleißfreie Winkel- und Umdrehungsanzahlmessung ermöglicht wird. Eine Automatisierungsachse wird im Laufe ihrer Lebenszeit nur zu einem ganz geringen Bruchteil beispielsweise im Promillebereich ohne Versorgungsspannung betrieben. Damit kann der Verschleiß durch Getriebeeingriff dementsprechend um einen Faktor von einer Million verringert und damit praktisch vernachlässigt werden. Die Erfindung erlaubt außerdem die Realisierung einer Getriebeankopplung bei großen Durchmessern, insbesondere Hohlwellendurchmessern, da die einleitend beschriebenen Effekte aufgrund einer Übersetzung in der ersten Multiturnstufe auf diese kurzen unbestromten Phasen beschränkt bleiben.

Das Getriebe sorgt bevorzugt für eine Untersetzung, um auf jeder Multiturnstufe eine höhere Größenordnung der Umdrehungsanzahl zu bestimmen. Bei großem Eingangswellendurchmesser ist dies aber zur ersten Multiturnstufe hin wegen des begrenzten Bauraums nicht immer möglich.

Um die Vorteile einer vollständig codierten Messstrecke ausnutzen zu können, sind vorzugsweise die erste Maßverkörperung und die Multiturnmaßverkörperungen absolut codiert, beispielsweise mit einem mehrspurigen Gray Code.

Das Kopplungselement ist dafür ausgebildet, die erste Multiturnstufe beim Einschalten der Multiturn-Winkelmessvorrichtung außer Getriebeeingriff mit der Eingangswelle und/oder beim Abschalten der Multiturn-Winkelmessvorrichtung in Getriebeeingriff mit der Eingangswelle zu bringen. Damit ist die erste Multiturnstufe genau dann an die Drehbewegung der Eingangswelle angekoppelt, wenn die Multiturn-Winkelmessvorrichtung nicht bestromt ist. Das Kopplungselement kann den Getriebeeingriff von sich aus herstellen oder aufheben, alternativ wird es von der Auswertungseinheit oder einer sonstigen Einheit mit Steuerungsfunktion entsprechend angesprochen.

Vorzugsweise ist mindestens eine weitere Multiturnstufe vorgesehen, wobei die weiteren Multiturnstufen jeweils eine weitere Multiturnmaßverkörperung und eine weitere Multiturnabtasteinrichtung aufweisen und wobei die Multiturnstufen eine von der ersten Multiturnstufe ausgehende Kette bilden, bei der jede Multiturnstufe mit einem untersetzten Getriebe an die vorige Multiturnstufe angekoppelt ist. Mit jeder weiteren Multiturnstufe wird der Bereich erweitert, in dem Umdrehungsanzahlen bestimmbar sind. Die Möglichkeit der Auskopplung des Getriebes mit Hilfe des Kopplungselement bezieht sich bevorzugt auf die kleinste Multiturnstufe, welche den Kopf der Getriebekette ausgehend von der Eingangswelle bildet und die wegen der nachfolgenden Untersetzungen besonders beansprucht und damit verschleißanfällig ist. Prinzipiell ist aber auch denkbar, spätere Multiturnstufen auszukoppeln.

Die Multiturn-Winkelmessvorrichtung weist bevorzugt einen elektronischen Umdrehungszähler auf, welcher die Umdrehungen der Eingangswelle zählt. Der Umdrehungszähler bestimmt somit die Umdrehungsanzahl alternativ oder kumulativ zu den Multiturnstufen. Es entsteht also eine Kombination aus einem elektronischen Umdrehungszähler und den elektromechanischen Multiturnstufen, wobei sich diese beiden Komponenten bevorzugt gerade abwechseln. Dann ist während einer anliegenden Versorgungsspannung der Umdrehungszähler aktiv, und zwischen Eingangswelle und erster Multiturnstufe besteht kein Getriebeeingriff. Ist die Multiturn-Winkelmessvorrichtung dagegen abgeschaltet, so werden Eingangswelle und erste Multiturnstufe in Getriebeeingriff gebracht, um die Umdrehungen zu verfolgen, während der elektronische Umdrehungszähler inaktiv bleibt.

Vorteilhafterweise weist die Multiturn-Winkelmessvorrichtung einen nichtflüchtigen Datenspeicher auf, um die Anzahl Umdrehungen, die Winkelstellung und/oder eine Zustandsinformation der ersten Multiturnstufe zu sichern. Wenn es mehr als eine Multiturnstufe gibt, wird vorzugsweise auch deren Zustand gespeichert. Zusätzlich kann auch ein flüchtiger Datenspeicher vorgesehen sein, welcher diese Aufgaben während des eingeschalteten Zustands erfüllt. Der nichtflüchtige Datenspeicher bildet sozusagen eine Schnittstelle für den Aufgabenwechsel zwischen dem elektronischen Umdrehungszähler und den elektromechanischen Multiturnstufen beim Ein- und Ausschalten.

In vorteilhafter Weiterbildung weist die Multiturn-Winkelmessvorrichtung einen Energiespeicher auf, welcher genügend Energie speichert, um die Winkelstellung, die Umdrehungsanzahl und/oder eine Zustandsinformation der ersten Multiturnstufe in dem nichtflüchtigen Datenspeicher zu sichern. Damit können die relevanten Daten für die Messung von Winkelstellung und Umdrehungsanzahl beim Ausschalten gerettet werden. Alternativ können diese Daten auch fortlaufend in einem nichtflüchtigen Datenspeicher abgelegt sein.

Der Umdrehungszähler ist bevorzugt dafür ausgebildet, nach dem Einschalten der Multiturn-Winkelmessvorrichtung eine in dem nichtflüchtigen Datenspeicher abgelegte Umdrehungsanzahl zurückzulesen. Damit wird der Umdrehungszähler sofort nach dem Einschalten mit dem letzten Zählerstand konfiguriert.

Noch bevorzugter ist die Auswertungseinheit dafür ausgebildet, nach dem Einschalten die beim Abschalten in dem nichtflüchtigen Datenspeicher abgelegte Winkelstellung, Umdrehungsanzahl und Multiturnzustandsinformation auszulesen und mit Signalen der ersten Abtasteinrichtung und der Multiturnabtasteinrichtungen zu vergleichen. Damit wird eine Verdrehung der Eingangswelle und eine resultierende Verdrehung der ersten Maßverkörperung sowie der ersten und weiteren Multiturnmaßverkörperungen während der Abschaltung erkannt und kompensiert. Die Multiturn-Winkelmessvorrichtung wird somit beim Wiedereinschalten in einen Zustand versetzt, als hätte sie auch Drehungen in der unbestromten Phase gemessen.

Die Multiturn-Winkelmessvorrichtung weist bevorzugt einen Energiespeicher auf, welcher genügend Energie für das Kopplungselement speichert, um nach Abschalten der Multiturn-Winkelmessvorrichtung die erste Multiturnstufe in Getriebeeingriff mit der Eingangswelle zu bringen. Damit wird der Wechsel von elektronischer Zählung durch den Umdrehungszähler, der in der folgenden unbestromten Phase nicht arbeiten kann, auf die mechanische Zählung in den Multiturnstufen vollzogen. Die beiden Energiespeicher zum Sichern der relevanten Messdaten und zur Herstellung des Getriebeeingriffs durch das Kopplungselement beim Abschalten können natürlich als ein gemeinsamer Energiespeicher ausgebildet sein.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Schnittdarstellung einer Ausführungsform einer erfindungsgemäßen Multiturn-Winkelmessvorrichtung;
- Fig. 2: eine schematische Draufsicht auf die Multiturn-Winkelmessvorrichtung gemäß Figur 1; und
- Fig. 3: ein Ablaufdiagramm für die Messung von Winkelstellung und Umdrehungsanzahl im bestromten und unbestromten Zustand.

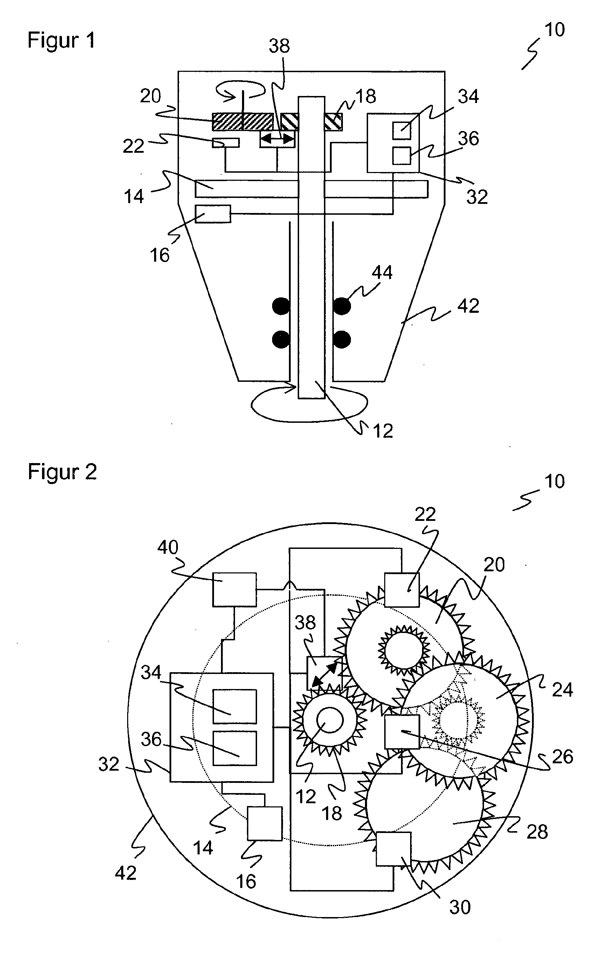

Die Figuren 1 und 2 zeigen eine Ausführungsform einer erfindungsgemäßen Multiturn-Winkelmessvorrichtung 10 im Schnitt beziehungsweise in der Draufsicht. Die Darstellungen sind schematisch. Einige Elemente sind der Übersichtlichkeit halber nur in der Draufsicht der Figur 2 vorhanden. Für den grundsätzlichen Aufbau der Multiturn-Winkelmessvorrichtung hinsichtlich Sensorik und allgemeinem mechanischen Aufbau kommen alle üblichen Bauformen in Betracht, von denen einleitend einige beispielhaft genannt sind.

Die Multiturn-Winkelmessvorrichtung 10 weist eine Eingangswelle 12 auf, deren Drehbewegung erfasst werden soll. Eine erste Maßverkörperung 14 ist drehfest mit der Eingangswelle 12 verbunden. Die erste Maßverkörperung trägt eine absolute optische Codierung in Form von Hell-Dunkel-Bereichen oder ähnlichen Markierungen. Grundsätzlich ist auch eine inkrementelle Codierung denkbar, aber sofern diese allein und nicht zusätzlich angebracht ist, kann auf diese Weise eine Verdrehung im unbestromten Zustand nicht direkt erkannt werden.

Eine erste Abtasteinrichtung 16 ist an der ersten Maßverkörperung 14 angeordnet, um die Winkelstellung anhand der Codierung zu bestimmen. Die erste Abtasteinrichtung 16 weist beispielsweise einen Lichtsender und einen Lichtempfänger auf, wobei abweichend von der dargestellten reflexiven Anordnung ebenso eine transmissive Anordnung möglich ist, bei welcher sich die erste Maßverkörperung 14 zwischen Lichtsender und Lichtempfänger befindet.

Die erste Maßverkörperung 14 bildet somit gemeinsam mit der ersten Abtasteinrichtung 16 eine auch als Singleturn bezeichnete Winkelmessvorrichtung für die Winkelstellung der Eingangswelle 12 innerhalb einer Umdrehung. Anstelle des vorgestellten optischen Messprinzips kann auch eine magnetische, induktive, kapazitive oder sonstige Messung der Winkelstellung erfolgen.

Eine erste Getriebestufe 18 koppelt untersetzt eine erste Multiturnmaßverkörperung 20 an die Eingangswelle 12 an. Bei größerem Durchmesser der Eingangswelle 12 reicht möglicherweise der Bauraum für eine Untersetzung nicht aus, so dass die erste Multiturnmaßverkörperung 20 übersetzt angekoppelt werden muss. Die Multiturnmaßverkörperung 20 trägt eine magnetische Codierung, beispielsweise durch sektorweise entgegengesetzte Magnetisierung, die vorzugsweise ebenfalls absolut ist. Diese Codierung wird mittels einer ersten Multiturnabtasteinrichtung 22 erfasst, etwa eines Hallsensors oder eines magnetoresistiven Sensors.

Die erste Multiturnmaßverkörperung 20 mit der ersten Multiturnabtasteinrichtung 22 bildet eine erste Multiturnstufe, welche ganze Umdrehungen der Eingangswelle 12 zählt. Eine zweite Multiturnstufe mit einer zweiten Multiturnmaßverkörperung 24 und einer zweiten Multiturnabtasteinrichtung 26 sowie eine dritte Multiturnstufe mit einer dritten Multiturnmaßverkörperung 28 und einer dritten Multiturnabtasteinrichtung 30 sind gleichartig aufgebaut und jeweils über ein Getriebe untersetzt angekoppelt. Die Multiturnstufen bilden somit eine Kette, in der jeweils die nachgeordnete Multiturnstufe eine entsprechend der Untersetzung höhere Größenordnung der Umdrehungsanzahl bestimmt. Diese Kette kann weitere, in Figur 2 nicht dargestellte Multiturnstufen umfassen. Auch die räumliche Aufteilung mit Stirngetriebe und den Multiturnstufen im Umfang des Singleturns ist beispielhaft zu verstehen.

Die Abtasteinrichtung 22 und die Multiturnabtasteinrichtungen 22, 26, 30 sind mit einer Auswertungseinheit 32 verbunden, welche die Messergebnisse anfordert, verarbeitet und allgemeine Steuerungsaufgaben der Multiturn-Winkelmessvorrichtung 10 erfüllt. Sie weist einen elektronischen Umdrehungszähler 34 auf, welcher auf einem von den Multiturnstufen unabhängigen Weg anhand der Winkelstellung der Maßverkörperung 14 ganze Umdrehungen der Eingangswelle 12 zählt. Weiterhin umfasst sie einen nichtflüchtigen Datenspeicher 36, um darin die zuletzt gemessene Winkelstellung der ersten Maßverkörperung 14 sowie den Zustand der Multiturnstufen, also insbesondere die jeweilige Drehstellung der Multiturnmaßverkörperungen 20, 24, 28 auch für den Fall zu speichern, dass die Stromversorgung der Multiturn-Winkelmessvorrichtung 10 unterbrochen ist.

An dem Getriebe 18 ist ein Kopplungselement 38 vorgesehen, welches wahlweise die Eingangswelle 12 in Getriebeeingriff oder außer Getriebeeingriff mit der ersten Multiturnmaßverkörperung 20 bringt. Eine entsprechende Ansteuerung erfolgt durch die mit dem Kopplungselement 38 verbundene Auswertungseinheit 32. Ein Energiespeicher 40 hält nach dem Ausschalten der Multiturn-Winkelmessvorrichtung 10 noch genügend Energie, um eine Auskopplung durch das Kopplungselement 38 sowie einen sichernden Speicherzugriff auf den Datenspeicher 36 zu versorgen.

Die Multiturn-Winkelmessvorrichtung 10 wird von einem Gehäuse 42 geschützt. In einem Lager 44 des Gehäuses 42 wird die Eingangswelle 12 drehbar gelagert.

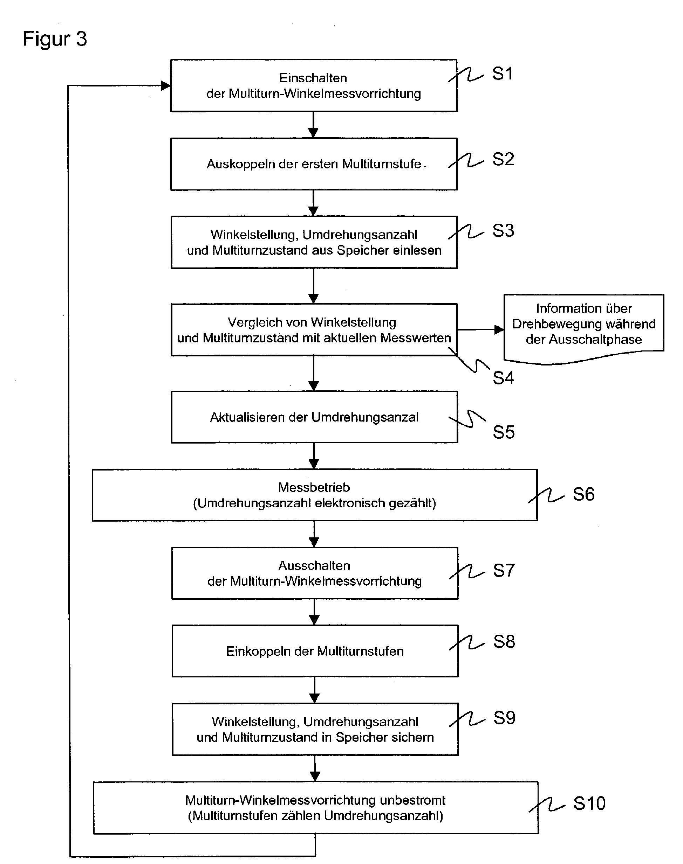

Das erfindungsgemäße Verfahren zum Bestimmen einer Winkelstellung und einer Umdrehungsanzahl in der Multiturn-Winkelmessvorrichtung 10 wird nun anhand der Figur 3 erläutert. Dieser Ablauf wird beispielsweise von der Auswertungseinheit 32 gesteuert.

Zunächst wird in einem ersten Schritt S1 die Multiturn-Winkelmessvorrichtung 10 eingeschaltet.

Nach dem Einschalten wird in einem zweiten Schritt S2 mit Hilfe des Kopplungselements 38 die erste Multiturnstufe ausgekoppelt, indem die Eingangswelle 12 und die erste Multiturnmaßverkörperung 20 außer Getriebeeingriff gebracht werden. Dadurch sind die Multiturnstufen im bestromten Zustand inaktiv.

Aus dem Datenspeicher 36 werden in einem dritten Schritt S3 die dort zuletzt abgelegten Messwerte gelesen, beispielsweise die Winkelstellung der ersten Maßverkörperung 14, die Umdrehungsanzahl sowie Zustandsinformationen der Multiturnstufen.

In einem vierten Schritt S4 werden diese zuletzt abgelegten Messwerte mit aktuellen Messwerten verglichen. Daraus ergibt sich ein Offset, der als Information über eine mögliche Drehbewegung während des unbestromten Zustands ausgegeben werden kann und der im weiteren Messbetrieb berücksichtigt wird.

Aus diesem Vergleich wird in einem fünften Schritt S5 die aktuelle Umdrehungsanzahl ermittelt. Dies berechnet sich aus der gespeicherten Umdrehungsanzahl, die anhand des Vergleichs im Schritt S4 um mögliche Drehbewegungen während der Ausschaltphase modifiziert wird.

In einem sechsten Schritt S6 beginnt dann der eigentliche Messbetrieb. Die Zählung von Umdrehungen erfolgt elektronisch in dem Umdrehungszähler 34. Die Multiturnstufen sind ausgekoppelt.

In einem siebten Schritt S7 wird dann nach einer variablen, möglicherweise lang andauernden Phase des Messbetriebs die Multiturn-Winkelmessvorrichtung 10 abgeschaltet.

Mit Hilfe der Versorgung des Energiespeichers 40 bringt in einem achten Schritt S8 das Kopplungselement 36 die Eingangswelle 12 in Getriebeeingriff mit der ersten Multiturnmaßverkörperung 20.

Ebenfalls mit Hilfe der Versorgung des Energiespeichers 40 werden die relevanten Messdaten, beispielsweise Winkelstellung der ersten Maßverkörperung 14, die gezählte Umdrehungsanzahl und der Zustand der Multiturnstufen, in dem Datenspeicher 36 gesichert.

In einem zehnten Schritt S10 ist die Multiturn-Winkelmessvorrichtung 10 dann abgeschaltet. Im unbestromten Zustand, in dem der elektronische Umdrehungszähler 34 mangels Energieversorgung inaktiv bleibt, erfassen jetzt die Multiturnstufen aufgrund des Getriebeeingriffs Verdrehungen der Eingangswelle 12. Wird die Multiturn-Winkelmessvorrichtung 10 dann wieder eingeschaltet, so beginnt der Ablaut erneut beim Schritt S1.

Solange also das Messsystem bestromt ist, wird die erste Stufe des Getriebes ausgekoppelt, und die Umdrehungen werden mit der Versorgungsspannung im Betrieb elektronisch mitgezählt. Beim Ausschalten der Versorgungsspannung wird noch ausreichend Energie gespeichert, um das Getriebe einzukoppeln und den Zustand der angekoppelten Multiturnstufen und den Zustand des elektronischen Umdrehungszählers 34 abzuspeichern. Beim Einschalten der Versorgungsspannung wird dieser Speicher ausgelesen, die inzwischen mögliche Verdrehung der Multiturnstufen gelesen und in Verbindung mit der ebenfalls gelesenen Winkelinformation der Eingangswelle 12 zu einem Messwert geformt, der nach Abziehen des aus den abgespeicherten Informationen gebildeten Messwerts den Offset des Zustands beim Ausschalten darstellt.

## Patentansprüche

1. Multiturn-Winkelmessvorrichtung (10), die eine drehfest an einer Eingangswelle (12) gelagerte erste Maßverkörperung (14), eine der ersten Maßverkörperung (14) zugeordneten ersten Abtasteinrichtung (16) zur Messung einer Winkelstellung der Eingangswelle (12), mindestens eine mit Hilfe eines Getriebes (18) an die Eingangswelle (12) angekoppelte erste Multiturnstufe (20, 22) mit einer ersten Multiturnmaßverkörperung (20) und einer ersten Multiturnabtasteinrichtung (22) zur Bestimmung einer Anzahl von Umdrehungen der Eingangswelle (12) sowie eine Auswertungseinheit (32) aufweist, die mit der ersten Abtasteinrichtung (16) und der ersten Multiturnabtasteinrichtung (22) verbunden ist, um die Winkelstellung und die Anzahl Umdrehungen der Eingangswelle (12) zu erfassen, wobei ein Kopplungselement (38) an der ersten Multiturnstufe (20, 22) vorgesehen ist, um die erste Multiturnstufe (20, 22) in Getriebeeingriff und/oder außer Getriebeeingriff mit der Eingangswelle (12) zu bringen,
**dadurch gekennzeichnet,**
**dass** das Kopplungselement (38) dafür ausgebildet ist, die erste Multiturnstufe (20, 22) beim Einschalten der Multiturn-Winkelmessvorrichtung (10) außer Getriebeeingriff mit der Eingangswelle (10) und/oder beim Abschalten der Multiturn-Winkelmessvorrichtung (10) in Getriebeeingriff mit der Eingangswelle (12) zu bringen.

2. Multiturn-Winkelmessvorrichtung (10) nach Anspruch 1,
wobei mindestens eine weitere Multiturnstufe (24, 26, 28, 30) vorgesehen ist, wobei die weiteren Multiturnstufen (24, 26, 28, 30) jeweils eine weitere Multiturnmaßverkörperung (24, 28) und eine weitere Multiturnabtasteinrichtung (26, 30) aufweisen und wobei die Multiturnstufen (24, 26, 28, 30) eine von der ersten Multiturnstufe (20, 22) ausgehende Kette bilden, bei der jede Multiturnstufe (24, 26, 28, 30) mit einem untersetzten Getriebe an die vorige Multiturnstufe (20, 22, 24, 26) angekoppelt ist.

3. Multiturn-Winkelmessvorrichtung (10) nach Anspruch 1 oder 2,
die einen elektronischen Umdrehungszähler (34) aufweist, welcher die Umdrehungen der Eingangswelle (12) zählt.

4. Multiturn-Winkelmessvorrichtung (10) nach einem der vorhergehenden Ansprüche,
die einen nichtflüchtigen Datenspeicher (36) aufweist, um die Anzahl Umdrehungen, die Winkelstellung und/oder eine Zustandsinformation der ersten Multiturnstufe (20, 22) zu sichern.

5. Multiturn-Winkelmessvorrichtung (10) nach Anspruch 4,
die einen Energiespeicher (40) aufweist, welcher genügend Energie speichert, um die Winkelstellung, die Umdrehungsanzahl und/oder eine Zustandsinformation der ersten Multiturnstufe (20, 22) in dem nichtflüchtigen Datenspeicher (36) zu sichern.

6. Multiturn-Winkelmessvorrichtung (10) nach Anspruch 4 oder 5,
wobei der Umdrehungszähler (34) dafür ausgebildet ist, nach dem Einschalten der Multiturn-Winkelmessvorrichtung (10) eine in dem nichtflüchtigen Datenspeicher (36) abgelegte Umdrehungsanzahl zurückzulesen.

7. Multiturn-Winkelmessvorrichtung (10) nach einem der Ansprüche 4 bis 6,
wobei die Auswertungseinheit (32) dafür ausgebildet ist, nach dem Einschalten die beim Abschalten in dem nichtflüchtigen Datenspeicher (36) abgelegte Winkelstellung, Umdrehungsanzahl und Multiturnzustandsinformation auszulesen und mit Signalen der ersten Abtasteinrichtung (16) und der Multiturnabtasteinrichtungen (22, 26, 30) zu vergleichen.

8. Multiturn-Winkelmessvorrichtung (10) nach einem der vorhergehenden Ansprüche,
die einen Energiespeicher (40) aufweist, welcher genügend Energie für das Kopplungselement (38) speichert, um nach Abschalten der Multiturn-Winkelmessvorrichtung (10) die erste Multiturnstufe (20, 22) in Getriebeeingriff mit der Eingangswelle (12) zu bringen.

9. Verfahren zur Messung von Winkelstellung und Umdrehungsanzahl einer Eingangswelle (12), wobei eine drehfest an der Eingangswelle (12) gelagerte erste Maßverkörperung (16) zur Bestimmung der Winkelstellung innerhalb einer Umdrehung und mindestens eine mit Hilfe eines Getriebes (18) an die Eingangswelle (12) angekoppelte erste Multiturnmaßverkörperung (20) einer ersten Multiturnstufe (20, 22) zur Bestimmung der Umdrehungsanzahl abgetastet wird, wobei mittels eines Kopplungselements (38) die erste Multiturnstufe (20, 22) wahlweise in Getriebeeingriff und/oder außer Getriebeeingriff mit der Eingangswelle (12) gebracht wird,
**dadurch gekennzeichnet,**
**dass** die erste Multiturnstufe (20, 22) beim Einschalten der Multiturn-Winkelmessvorrichtung (10) außer Getriebeeingriff mit der Eingangswelle (12) und/oder beim Abschalten der Multiturn-Winkelmessvorrichtung (10) in Getriebeeingriff mit der Eingangswelle (12) gebracht wird.

10. Verfahren nach Anspruch 9,
wobei die Umdrehungsanzahl der Eingangswelle (12) während einer Stromversorgung mit einem elektronischen Umdrehungszähler (34) und ohne Stromversorgung mit der mindestens einen Multiturnstufe (20, 22) gezählt wird.

11. Verfahren nach Anspruch 9 oder 10,
wobei die Umdrehungsanzahl, die Winkelstellung und/oder eine Zustandsinformation der ersten Multiturnstufe (20, 22) in einem nichtflüchtigen Datenspeicher (36) gesichert wird, wenn eine Stromversorgung unterbrochen wird.

12. Verfahren nach Anspruch 11,
wobei die elektronisch gezählte Umdrehungsanzahl aus dem nichtflüchtigen Datenspeicher (36) zurückgelesen wird, wenn eine Stromversorgung wiederhergestellt wird, und/oder wobei die Winkelstellung, Umdrehungsanzahl und Multiturnzustandsinformation aus dem nichtflüchtigen Datenspeicher (36) ausgelesen und mit Signalen der ersten Abtasteinrichtung (16) und der Multiturnabtasteinrichtungen (22, 26, 30) verglichen wird, um während der Stromunterbrechung erfolgte Drehbewegungen der Eingangswelle (12) für die gemessene Winkelstellung und Umdrehungsanzahl zu berücksichtigen.

13. Verfahren nach einem der Ansprüche 9 bis 12,
wobei vor einer Stromunterbrechung genug Energie gespeichert wird, um die Winkelstellung, die Umdrehungsanzahl und/oder eine Zustandsinformation der ersten Multiturnstufe (20, 22) in einem nichtflüchtigen Datenspeicher (36) zu sichern und/oder die erste Multiturnstufe (20, 22) in Getriebeeingriff mit der Eingangswelle (12) zu bringen.

## Claims

1. Multi-turn angle measuring device (10) rotationally fixed to an input shaft (12) bearing the first measuring scale (14), one of the first measuring scale (14) associated with the first scanner (16) for measuring an angular position of the input shaft (12), at least one by means of a transmission (18) to the input shaft (12) coupled the first multi-turn stage (20, 22) with a first multi-turn standard (20) and a first multiturn scanning device (22) for determining a number of revolutions of the input shaft (12) and a evaluation unit (32) connected to the first scanning device (16) and the first Multi-turn scanning device (22) is connected to the angular position and the number of revolutions of the input shaft (12) to detection sensor, wherein a coupling element (38) the first multiturn stage (20, 22) is provided, the first multiturn stage (20, 22) in transmission intervention and/or non-meshing of gears to be engaged with the input shaft (12), **characterized in that** the coupling element (38) is adapted to the first multi-turn stage (20, 22) when switching on the multi-turn angle measuring device (10) out of gear-engaged with the input shaft (10) and/or the disconnection of the multi-turn angle measuring device (10) bringing gear engaged with the input shaft (12).

2. Multi-turn angle measuring device (10) according to claim 1, wherein at least one additional multi-turn stage (24, 26, 28, 30) is provided, wherein said further multi-turn steps (24, 26, 28, 30) each have a further multi-turn standard (24, 28) and a further multi-turn scanning device (26, 30), and wherein the multi-turn steps (24, 26, 28, 30) forming one of the first multi-turn stage (20, 22) outgoing chain, wherein each multi-turn stage (24, 26, 28, 30) with a decimated transmission to the previous multiturn stage (20, 22, 24, 26) is coupled.

3. Multi-turn angle measuring device (10) according to claim 1 or 2, which comprises an electronic revolution counter (34) which counts the revolutions of the input shaft (12).

4. Multi-turn angle measuring device (10) according to any one of the preceding claims which comprises a non-volatile data memory (36), to secure the number of rotations, the angular position and/or state information of the first multiturn stage (20, 22).

5. Multi-turn angle measuring device (10) according to claim 4, which comprises an energy storage (40) which stores sufficient energy to ensure the angular position, number of revolutions and/or a state information of the first multiturn stage (20, 22) in the non-volatile data memory (36).

6. Multi-turn angle measuring device (10) according to claim 4 or 5, said revolution counter (34) is adapted to after switching of the multi-turn angle measuring device (10) to read back the data in the nonvolatile memory (36) stored number of revolutions.

7. Multi-turn angle measuring device (10) according to any one of claims 4 to 6, wherein the evaluation unit (32) is adapted to read out stored after switching on the switching off in the non-volatile data memory (36), angular position, number of revolutions and multiturn state information and signals of the first scanning device (16) and the multi-turn scanning devices (22, 26, 30) to compare.

8. Multi-turn angle measuring device (10) according to any one of the preceding claims, which comprises an one energy storage (40) which stores sufficient energy for the coupling element (38) to enable disconnection of the multi-turn angle measuring device (10), the first multi-turn stage (20, 22) into gear engagement with the input shaft (12).

9. Method of measuring angular position and number of revolutions of an input shaft (12), a rotatably mounted on the input shaft (12) comprises first measuring scale (16) for determining the angular position within one revolution and at least one by means of a transmission (18) to the input shaft (12) coupled first multi-turn standard (20) of a first multi-turn stage (20, 22) is sampled to determine the number of revolutions, by means of a coupling element (38), the first multiturn stage (20, 22) either in transmission intervention and/or is associated with the input shaft (12) out of gear engagement, **characterized in that** the first multiturn stage (20, 22) upon connecting the multi-turn angle measuring device (10) except gear engaged with the input shaft (12) and/or when switching off the multi-turn angle measuring device (10) in gear grip to the input shaft (12) is brought.

10. Method according to claim 9, wherein the number of revolutions of the input shaft (12) is counted during a power supply to an electronic revolution counter (34) and no power supply to the at least one multiturn stage (20, 22).

11. Method according to claim 9 or 10, wherein the revolution number, the angular position and/or a state information of the first multi-turn stage (20, 22) is secured in a non-volatile data memory (36) when a power supply is interrupted.

12. Method according to claim 11, wherein the electronically counted rotation number of the non-volatile data memory (36) is read back, when a power supply is restored, and/or the angular position, number of revolutions and multiturn state information from the non-volatile data memory (36) read out, and with signals from said first sampling means (16) and the multi-turn scanning devices (22, 26, 30) is compared to the current interruption was carried out while rotary motion of the input shaft (12) for the measured angular position and number of revolutions to be considered.

13. Method according to any one of claims 9 to 12, wherein prior to a power interruption, enough energy is stored to the angular position, the rotation number and/or state information of the first multi-turn stage (20, 22) in a non-volatile data memory (36) to secure it and/or the first multi-turn stage (20, 22) to bring in gear engaged with the input shaft (12).

## Revendications

1. Dispositif de mesure d'angles multi-tours (10) solidaire en rotation d' un arbre d'entrée (12) portant la première échelle de mesure (14), l'une de la première graduation de mesure (14) associé au premier scanner (16) pour mesurer une position angulaire d' l'arbre (12), au moins une par l'intermédiaire d'une transmission (18) à l'arbre d'entrée (12) d'entrée couplée au premier étage multi-tours (20, 22) avec un premier standard multi-tours (20) et une première dispositif de balayage de plusieurs tours (22) pour déterminer un nombre de tours de l'arbre d'entrée (12) et une unité d'évaluation (32) raccordé au premier dispositif de balayage (16) et la première multi- tour de balayage de- vice (22) est relié à la position angulaire et du nombre de tours de l'arbre d'entrée (12) à capteur de détection, dans lequel un élément d'accouplement (38) du premier étage de multitour (20, 22) est prévue, le premier étage de multitour (20, 22) à l'intervention de transmission et/ou de non- engrènement des engrenages pour être en prise avec l'arbre d'entrée (12), **caractérisé en ce que** l'élément de couplage (38) est adaptée à la première étape multi-tours (20, 22) lors de la commutation sur le multi tournant à angle périphérique (10) de mesure de vitesse engagée avec l'arbre d'entrée (10) et/ou la déconnexion de l'angle de mesure de dispositif multi- tour (10) d'engrenage qui porte en prise avec l'arbre d'entrée (12).

2. Dispositif de mesure d'angles multi-tours (10) selon la revendication 1 de mesure, dans lequel au moins un étage supplémentaire à spires multiples (24, 26, 28, 30) est prévu, dans lequel ledit multi-tours étapes de fourrurether (24, 26, 28, 30) présentent chacun un autre type multi-tours (24, 28) et un dispositif d'exploration multi- tour supplémentaire (26, 30), et dans lequel les étapes consistant à multi-tours (24, 26, 28, 30) formant l'un des première étape multi- tour (20, 22) chaîne sortant, dans lequel chaque étape multitour (24, 26, 28, 30) avec une transmission dec- Imated à l'étape de multitour précédente (20, 22, 24, 26) est couplaidé.

3. Dispositif de mesure d'angles multi-tours de mesure (10) selon la revendication 1 ou 2, qui com-prend un compte-tours électronique (34) qui compte le nombre de tours de l'arbre d'entrée (12).

4. Dispositif de mesure d'angles multi-tours (10) selon l'une quelconque des revendications précédentes, qui comprend une mémoire de données non volatile (36), pour fixer le nombre de rotations, la position angulaire et/ou des informations d'état du premier multiples tournant à l'étape (20, 22).

5. Dispositif de mesure d'angles multi-tours de mesure (10) selon la revendication 4, qui comprend un accumulateur d'énergie (40) qui stocke une énergie suffisante pour assurer la position angulaire, le nombre de tours et/ou une information d'état du premier étage multi-tours (20, 22) dans la mémoire de données non volatile (36).

6. Dispositif de mesure d'angles multi-tours (10) selon la revendication 4 ou 5, ladite contre- révolution (34) est adapté pour, après la commutation du dispositif multi-tours angle ment mesurable (10) pour relire les données de la non volatile mémoire (36) numéro enregistré des révolutions.

7. Dispositif de mesure d'angles multi-tours (10) de mesure selon l'une quelconque des revendications 4 à 6, dans lequel l'unité d'évaluation (32) est adapté pour lire stockée après activation de la coupure dans la mémoire de données non volatile (36), angulaire position, le nombre de tours et des informations d'état sur plusieurs tours et les signaux du premier dispositif de balayage (16) et les dispositifs multi-tours balayage (22, 26, 30) pour comparer.

8. Dispositif de mesure d'angles multi-tours de mesure (10) selon l'une quelconque des revendications précédentes, qui comprend un un accumulateur d'énergie (40) qui stocke l'énergie suffisante pour que l'élément de couplage (38) pour permettre la déconnexion de l'Dispositif de mesure d'angles multi-tours de mesure (10), la première étape multi-tours (20, 22) en engrenage en prise avec l'arbre d'entrée (12).

9. Procédé de mesure de position angulaire et du nombre de tours d'un arbre d'entrée (12), une montée en rotation sur l'arbre d'entrée (12) comprend des première échelle mesu- urant (16) pour déterminer la position angulaire sur un tour et au moins un moyen d'une transmission (18) à l'arbre d'entrée (12) couplé premier standard multi-tours (20) d'un premier étage à spires multiples (20, 22) est échantillonné pour déterminer le nombre de tours, au moyen d'un élément de couplage (38), la première étape sur plusieurs tours (20, 22) soit à une intervention de transmission et/ou est associé à l'arbre d'entrée (12) hors de l'engagement des vitesses, **caractérisé en ce que** le premier étage de multitour (20, 22) lors de la connexion du dispositif de mesure d'angles multi-tours (10) à l'exception engrenage en prise avec l'arbre d'entrée périphérique (12) et/ou lors de la coupure de l'angle multi- tour de mesure (10) l'adhérence vitesse à l'arbre d'entrée (12) est amené.

10. Procédé selon la revendication 9, dans lequel le nombre de tours de l'arbre d'entrée (12) n'est prise en compte au cours d'une alimentation à un compte-tours électronique (34) et aucune alimentation électrique à l'au moins un étage de multitour (20, 22).

11. Procédé selon la revendication 9 ou 10, dans lequel le nombre de tours, la position de angu -laire et/ou une information d'état du premier étage multi-tours (20, 22) est fixé dans une mémoire de données non volatile (36) lorsqu'un alimentation est interrompue.

12. Procédé selon la revendication 11, dans lequel le nombre de rotations comptées électroniquement de la mémoire de données non volatile (36) est lue en arrière, quand une alimentation électrique est rétablie, et/ou la position angulaire, le nombre de tours et de l'information sur plusieurs tours de l'état de la non la mémoire de données volatile (36) de lire et de signaux venant desdits premiers moyens d'échantillonnage (16) et les dispositifs de numérisa-tion multi-tours (22, 26, 30) est comparée à l'interruption du courant a été effectué alors que le mouvement de rotation de l' l'arbre d'entrée (12) pour la position angulaire mesurée et le nombre de tours à prendre en considération.

13. Procédé selon l'une quelconque des revendications 9 à 12, dans lequel, avant une puissance en - ruption, suffisamment d'énergie est stocké à la position angulaire, la rotation nom-bre et/ou des informations d'état du premier étage multi-tours (20, 22) dans une mémoire de données non volatile (36) pour le fixer et/ou de la première phase multi-tours (20, 22) pour mettre en prise en prise avec l'arbre d'entrée (12).
